# EUROPÄISCHE PATENTSCHRIFT

(11) **EP 2 324 564 B1**
(45) Veröffentlichungstag und Bekanntmachung des Hinweises auf die Patenterteilung: **25.02.2015**
(21) Anmeldenummer: 08804355.9
(22) Anmeldetag: 18.09.2008
(51) Int. Cl.: H02M 3/156

(54) **BOOST-KONVERTER UND VERFAHREN ZUM BETREIBEN EINER ELEKTRISCHEN LAST AN EINEM BOOST-KONVERTER**
BOOST CONVERTER AND METHOD FOR OPERATING AN ELECTRICAL LOAD ON A BOOST CONVERTER
CONVERTISSEUR SURVOLTEUR ET PROCÉDÉ POUR FAIRE FONCTIONNER UNE CHARGE ÉLECTRIQUE SUR UN CONVERTISSEUR SURVOLTEUR

(43) Veröffentlichungstag der Anmeldung: 25.05.2011
(73) Patentinhaber: OSRAM GmbH, 80807 München (DE)
(72) Erfinder: RUDOLPH, Bernd, 85659 Forstern (DE)
(86) Internationale Anmeldenummer: PCT/EP2008/062413
(87) Internationale Veröffentlichungsnummer: WO 2010/031432

(56) Entgegenhaltungen:
- EP-A- 0 256 231
- EP-A- 0 809 421

## Beschreibung

### Technisches Gebiet

Die vorliegende Erfindung betrifft einen Boost-Konverter mit einem Eingang mit einem ersten und einem zweiten Eingangsanschluss zum Anlegen einer Eingangsspannung, einem Ausgang mit einem ersten und einem zweiten Ausgangsanschluss zum Bereitstellen einer Ausgangsspannung, einer Boostdrossel, einer Boostdiode, wobei die Boostdrossel und die Boostdiode in Serie zwischen den ersten Eingangsanschluss und den ersten Ausgangsanschluss gekoppelt sind, einem Boostschalter, der zwischen den Verbindungspunkt der Boostdrossel und der Boostdiode einerseits und den zweiten Eingangsanschluss andererseits gekoppelt ist, einem Boost-Kondensator der zwischen den ersten und den zweiten Ausgangsanschluss gekoppelt ist, und einer Steuervorrichtung, die ausgelegt ist, an ihrem Ausgang ein Ansteuersignal zum Ansteuern des Boostschalters bereitzustellen, wobei die Steuervorrichtung einen ersten Eingang umfasst, an den ein Signal gekoppelt ist, das mit der Ausgangsspannung korreliert ist, wobei die Steuervorrichtung einen Regelverstärker umfasst mit einer Übertragungsfunktion, die im Bereich des Sollwertes der Ausgangsspannung eine Nichtlinearität aufweist. Sie betrifft überdies ein Verfahren zum Betreiben einer elektrischen Last an einem derartigen Boost-Konverter.

### Stand der Technik

In der Schrift EP-A-0 809 421 ist ein Verfahren zur Effizienzsteigerung eines Boost Konverter offenbart.

Ein gattungsgemäßer Boost-Konverter ist bekannt aus der EP 0 256 231 B1. Ein derartiger Boost-Konverter wird als kostengünstige Steuerschaltung für die Leistungsfaktorkorrektur (PFC = Power Factor Correction) verwendet. Der dort verwendete Regelverstärker umfasst einen Shunt-Regler mit interner Referenzspannung, siehe hierzu das Bauelement D6 von Fig. 2 der genannten Druckschrift. Dieses Bauelement D6 kann beispielsweise durch einen Baustein TL 431 der Firma STM realisiert sein. Ein derartiger Baustein ist einerseits teuer, andererseits ist die Ruhestromaufnahme relativ hoch. Des Weiteren beinhaltet die erwähnte Schaltung zwar einen Schutz vor Überspannung am Ausgang, jedoch wirkt dieser erst mit einer Verzögerung von einigen 10 ms, weil die Hauptregelzeitkonstante mit C13 entsprechend ausgebildet sein muss, um eine annähernd sinusförmige Netzstromaufnahme zu gewährleisten. Das kann für viele empfindliche Bauteile zu lang sein.

Schließlich ist die Ansprechschwelle für den Überspannungsschutz recht ungenau, da die Umschaltschwelle eines Schmitt-Trigger-Inverters, und zwar die des Schmidt-Trigger-Inverters STb, direkt dafür benutzt wird.

### Darstellung der Erfindung

Die Aufgabe der vorliegenden Erfindung besteht deshalb darin, einen gattungsgemäßen Boost-Konverter beziehungsweise ein gattungsgemäßes Verfahren derart weiterzubilden, dass die oben genannten Nachteile des Stands der Technik vermieden werden.

Diese Aufgabe wird gelöst durch einen Boost-Konverter mit den Merkmalen von Patentanspruch 1 sowie durch ein Verfahren mit den Merkmalen von Patentanspruch 6.

Der vorliegenden Erfindung liegt die Erkenntnis zugrunde, dass die obige Aufgabe gelöst werden kann, wenn als Grundstruktur für den Regelverstärker ein Stromspiegel verwendet wird. Durch geeignete Beschaltung des Stromspiegels lässt sich dann die benötigte Funktion des Regelverstärkers erzeugen. Diese besteht darin, eine Übertragungsfunktion bereitzustellen, die im Bereich des Sollwerts der Ausgangsspannung eine Nichtlinearität aufweist. Durch diese Nichtlinearität kann der zunächst mit vorgegebener Einschaltdauer betriebene Boostschalter früher abgeschaltet werden, wenn die Ausgangsspannung einen vorgegebenen Schwellwert überschreitet. Dadurch kann die Ausgangsspannung auf einen vorgegebenen Wert gehalten werden.

Geregelt wird damit die Einschaltdauer des Boostschalters, die zur Erzielung einer Leistungsfaktorkorrektur über eine Netzhalbwelle näherungsweise konstant sein muss. Stromspiegel, insbesondere bei bipolarer Realisierung, sind vergleichsweise günstig erhältlich und arbeiten bereits ab einigen 10 µA zuverlässig.

Bevorzugt umfasst die Steuervorrichtung einen ersten, einen zweiten und einen dritten Inverter, wobei der Eingang des ersten Inverters mit dem Verbindungspunkt der Boostdrossel und der Boostdiode gekoppelt ist, wobei der Eingang des zweiten Inverters mit dem Ausgang des ersten Inverters einerseits und mit dem Ausgang des Regelverstärkers andererseits gekoppelt ist, wobei der Eingang des dritten Inverters mit dem Ausgang des zweiten Inverters gekoppelt ist, wobei der Ausgang des dritten Inverters mit dem Ausgang der Steuervorrichtung gekoppelt ist. Dieser Aufbau ist grundsätzlich aus der genannten EP 0 256 231 A2 bekannt, ermöglicht jedoch im Rahmen der vorliegenden Erfindung, siehe unten, diverse vorteilhafte Weiterbildungen.

Bevorzugt umfasst der Stromspiegel einen Eingangstransistor und einen Ausgangstransistor, wobei zwischen die Bezugselektrode des Ausgangstransistors und ein Bezugspotential ein Hilfstransistor gekoppelt ist, wobei die Steuerelektrode des Hilfstransistors mit dem Abgriff eines Spannungsteilers gekoppelt ist, der zwischen den ersten und den zweiten Ausgangsanschluss gekoppelt ist und mindestens einen ersten ohmschen Widerstand und eine erste Zenerdiode umfasst. Durch diese erste Zenerdiode wird die gewünschte Nichtlinearität im Bereich des Sollwerts der Ausgangsspannung erzeugt.

Alternativ oder zusätzlich kann der Stromspiegel einen Eingang aufweisen, der mit dem ersten Ausgangsanschluss gekoppelt ist, wobei zwischen den ersten Ausgangsanschluss und den Eingang des Stromspiegels die Serienschaltung eines nichtlinearen Elements, insbesondere einer Zenerdiode, und mindestens eines ohmschen Widerstands gekoppelt ist. Bei dieser Variante ist das nichtlineare Element, hier insbesondere eine Zenerdiode, auf andere Art und Weise mit dem Stromspiegel verschaltet als in der zuvor genannten Ausführungsform. Während bei der erstgenannten Ausführungsform die Zenerdiode als Niedervoltdiode ausgeführt sein kann, die standardmäßig in Toleranzen bis zu 1 % erhältlich ist, ist für die zweitgenannte Ausführungsform eine Hochvolt-Zenerdiode nötig, die in der Praxis eine Spannung bis 400 V aushalten können muss. Darüber hinaus zeichnet sich die zuerst genannte Ausführungsform im Vergleich zu der zweitgenannten Ausführungsform durch geringere Verluste aus.

Unabhängig von der gewählten Ausführungsform ist weiterhin bevorzugt, wenn die Steuervorrichtung einen ersten weiteren Inverter umfasst, dessen Eingang mit dem Abgriff eines Spannungsteilers gekoppelt ist, der eine Zenerdiode und mindestens einen ohmschen Widerstand umfasst, und zwischen den ersten und den zweiten Ausgangsanschluss gekoppelt ist, wobei zwischen den Ausgang des ersten weiteren Inverters und ein Bezugspotential die Serienschaltung einer weiteren Zenerdiode und eines ohmschen Widerstands gekoppelt ist, wobei der Verbindungspunkt der weiteren Zenerdiode und des ohmschen Widerstands mit dem Ausgang der Steuervorrichtung gekoppelt ist. Hierbei kann als Spannungsteiler auch der im Zusammenhang mit der ersten und zweiten Ausführungsform erwähnte, jeweils eine Zenerdiode umfassende Spannungsteiler, verwendet werden. Durch die genannte Weiterbildung ist es möglich, einen so genannten "Undervoltage Lockout" zu realisieren. Dadurch wird sichergestellt, dass bei einer zu geringen Spannung der Boostschalter ausgeschaltet bleibt.

Bevorzugt umfasst dabei die Steuervorrichtung einen zweiten weiteren Inverter, wobei der Verbindungspunkt der weiteren Zenerdiode und des ohmschen Widerstands mit dem Eingang des zweiten weiteren Inverters gekoppelt ist, wobei der Ausgang des zweiten weiteren Inverters mit dem Eingang des dritten Inverters gekoppelt ist. Auf diese Weise kann besonders einfach ein grundsätzlich durch die weitere Zenerdiode und den ohmschen Widerstand registrierte Unterspannungsfall zum Ausschalten des Boostschalters verwendet werden.

Bevorzugt ist der Eingang des ersten Inverters über eine erste Diode mit einer Hilfsspannung und über eine zweite Diode an das Bezugspotential gekoppelt und der Eingang des zweiten Inverters ist über eine dritte Diode mit der Hilfsspannung und über eine vierte Diode mit dem Bezugspotential gekoppelt. Dadurch werden die Eingänge des ersten und zweiten Inverters derart konditioniert, dass sie auf die zugeführten Signale, einerseits zur Feststellung des Entmagnetisierungszustands der Boostinduktivität (Inverter 1) und zur Zuführung des Ausgangssignals des Regelverstärkers (Inverter 2), eingesetzt werden können.

Weitere vorteilhafte Ausführungsformen ergeben sich aus den Unteransprüchen.

Die mit Bezug auf den erfindungsgemäßen Boost-Konverter dargestellten bevorzugten Ausführungsformen und deren Vorteile gelten entsprechend, soweit anwendbar, für das erfindungsgemäße Verfahren.

### Kurze Beschreibung der Zeichnung(en)

Im Nachfolgenden werden zwei Ausführungsbeispiele eines erfindungsgemäßen Boost-Konverters unter Bezugnahme auf die beigefügten Zeichnungen näher beschrieben. Es zeigen:
- Fig. 1: in schematischer Darstellung ein erstes Ausführungsbeispiel eines erfindungsgemäßen Boost-Konverters; und
- Fig. 2: in schematischer Darstellung ein zweites Ausführungsbeispiel eines außerhalb der Erfindung liegenden Boost-Konverters.

### Bevorzugte Ausführung der Erfindung

Im Nachfolgenden werden bei der Beschreibung der unterschiedlichen Ausführungsbeispiele für gleiche oder ähnliche Bauelemente dieselben Bezugszeichen verwendet. Sie werden deshalb nur einmal eingeführt.

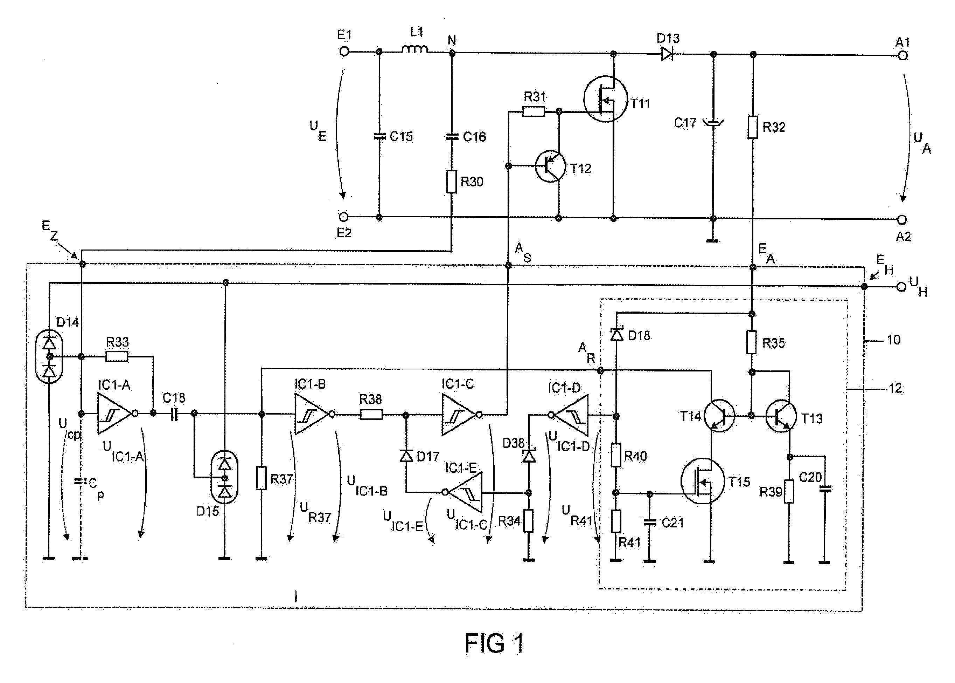

Fig. 1 zeigt in schematischer Darstellung ein erstes Ausführungsbeispiel eines erfindungsgemäßen Boost-Konverters. Dieser weist einen Eingang mit einem ersten E1 und einem zweiten Eingangsanschluss E2 zum Anlegen einer Eingangsspannung U_{E} auf, wobei die Eingangsspannung U_{E} insbesondere eine gleichgerichtete Netzwechselspannung darstellen kann. Zu wechselstrommäßigen Schließen des Lade- und Entladestromkreises der Boostdrossel L1 ist der Kondensator C15 vorgesehen. Am Ausgang des Boost-Konverters, d. h. zwischen einem ersten A1 und einem zweiten Ausgangsanschluss A2, wird eine Ausgangsspannung U_{A} bereitgestellt. Zwischen dem Eingangsanschluss E1 und dem ersten Ausgangsanschluss A1 ist die Serienschaltung einer Boostdrossel L1 sowie einer Boostdiode D13 vorgesehen. Als Boostschalter ist ein Feldeffekttransistor T11 vorgesehen, der zwischen den Verbindungspunkt der Boostdrossel L1 und der Boostdiode D13 einerseits und den zweiten Ausgangsanschluss A2 andererseits gekoppelt ist. Parallel zum Ausgang A1, A2 ist ein Kondensator C17 vorgesehen, der dazu dient, die Ausgangsspannung U_{A} zu stabilisieren. Vorliegend ist der Boostschalter T11 mit der Kombination eines Bipolartransistors T12 und eines ohmschen Widerstands R31 beschaltet, die für ein beschleunigtes Ausschalten des Boostschalters T11 sorgen.

Während einer Aufladungsphase fließt ein Strom im Kreis C15, L1, T11 und während einer Entladungsphase fließt der Strom im Kreis C15, L1, D13, C17.

Zur Ansteuerung des Boostschalters T11 ist eine Steuervorrichtung 10 vorgesehen, an deren Eingang E_{H} eine Hilfsspannung U_{H} bereitgestellt wird. Über einen weiteren Eingang E_{Z} ist sie über die Serienschaltung eines Kondensators C16 und eines ohmschen Widerstands R30 mit dem Verbindungspunkt zwischen der Boostdrossel L1 und der Boostdiode D13 gekoppelt. Auf diesem Wege ist es möglich, den entmagnetisierten Zustand der Boostdrossel L1 festzustellen und bei der Steuerung des Boostschalters T11 zu berücksichtigen (Critical Conduction oder Transition Mode). Über einen ohmschen Widerstand R32 wird ein mit der Ausgangsspannung U_{A} korreliertes Signal über einen Eingang E_{A} in die Steuervorrichtung 10 eingekoppelt. An ihrem Ausgang A_{S} stellt die Steuervorrichtung 10 das Steuersignal für den Boostschalter T11 bereit.

Die Steuervorrichtung 10 umfasst im Wesentlichen eine Kaskade von drei Invertern IC1-A, IC1-B und IC1-C sowie einen Regelverstärker 12. Die grundsätzliche Funktionsweise der Inverter-Kaskade ist bereits aus der bereits erwähnten EP 0 256 231 B1 bekannt.

Eine Startschaltung wird dadurch realisiert, dass der Eingang des Inverters IC1-A, an dem eine gestrichelt eingezeichnete parasitäre Kapazität C_{P} wirkt, mit dem Mittelpunkt einer Doppeldiode D14 gekoppelt ist, wobei die Kathode der obenliegenden Diode mit der Hilfsspannung U_{H} gekoppelt ist und die Anode der untenliegenden Diode mit dem Bezugspotential. Zwischen dem Eingang des Inverters IC1-A und seinem Ausgang ist ein ohmscher Widerstand R33 gekoppelt.

Durch die parasitäre Kapazität C_{P} und den ohmschen Widerstand R33 wird ein freischwingender RC-Oszillator gebildet. Die Spannung U_{IC1-A} am Ausgang des Inverters IC1-A ist, bezogen auf das Hilfsspannungspotential U_{H}, entweder high oder low. Ist U_{IC1-A} high, wird die parasitäre Kapazität C_{P} über den Widerstand R33 geladen. Umgekehrt wird bei U_{IC1-A} low die parasitäre Kapazität C_{P} über den ohmschen Widerstand R33 entladen. Das am Ausgang des Inverters IC1-A anliegende wechselsignal wird über den zweiten Inverter IC1-B und den dritten Inverter IC1-C an den Eingang des Boostschalter T11 gekoppelt und schaltet dadurch den Boostschalter ein und aus.

Eine maximale Einschaltdauer des Schalters T11 wird festgelegt durch den Kondensator C18 und den ohmschen Widerstand R37 und näherungsweise der Differenz aus (U_{H} - 1 V) und der unteren Umschaltschwelle des Schmitt-Trigger-Inverters ("negative-going input voltage switching level"). Der Kondensator C18 ist seriell zwischen den Ausgang des ersten Inverters IC1-A und den Eingang des zweiten Inverters IC1-B gekoppelt, während der ohmsche Widerstand R37 zwischen den Eingang des zweiten Inverters IC1-B und das Bezugspotential gekoppelt ist. Ebenso wie der erste Inverter IC1-A ist der Eingang des zweiten Inverters IC1-B unter Verwendung einer Doppeldiode D15 mit dem Hilfsspannungspotential U_{H} gekoppelt. Der Kondensator C18 kann sich dabei über die Diode D15 zur Hilfsspannungsquelle U_{H} entladen. Ist die Spannung U_{IC1-A} low, entlädt sich der Kondensator C18 über den ohmschen Widerstand R37 auf Bezugspotential. Geht demnach die Spannung U_{IC1-A} auf high, geht die Spannung U_{R37} entsprechend auf high. Daraufhin geht die Spannung U_{IC1-B} am Ausgang des zweiten Inverters IC1-B auf low. In Folge geht die Spannung U_{IC1-c} am Ausgang des dritten Inverters IC1-C auf high und schaltet den Boostschalter T11 ein.

Über den Kondensator C16 und den ohmschen Widerstand R30 wird die Spannung am Punkt N sensiert. Diese fällt, wenn die Boostdrossel L1 entmagnetisiert ist, auf den momentanen Spitzenwert der Eingangsspannung U_{E} (beispielsweise von 400 V auf 325 V). Dadurch wird ein negativer Strom durch den Kondensator C16 erzeugt, der die parasitäre Kapazität C_{P} entlädt. Dadurch wird die Spannung U_{CP} an der parasitären Kapazität C_{P} negativ und von der Diode D14 auf ca. minus 1 V geklemmt. Dadurch geht die Ausgangsspannung U_{IC1-A} des ersten Inverters IC1-A auf high und schaltet über die bereits erwähnte Kaskade den Boostschalter T11 ein. Dadurch wird die Boostdrossel L1 erneut aufgeladen.

Nach Ablauf der maximalen Einschaltdauer sinkt die Spannung U_{R37} am Eingang des zweiten Inverters IC1-B auf den unteren Umschaltpegel ("negative-going input voltage switching level), wodurch der zweite Inverter IC1-B schaltet und damit - über den dritten Inverter IC1-C - den Boostschalter T11 ausschaltet.

Zum Regelverstärker 12: Der Regelverstärker 12 erhält über seinen Eingang E_{A} eine Information über die Größe der Ausgangsspannung U_{A}. Sein Ausgang A_{R} wird mit dem Eingang des zweiten Inverters IC1-B gekoppelt. Demnach wird dem ohmschen Widerstand R37 eine variable Impedanz parallelgeschaltet. Der Kondensator C18 kann dadurch schneller geladen werden als nur über den ohmschen Widerstand R37. Dies ermöglicht die Einschaltdauer des Schalters T11 kürzer zu gestalten als die durch den Kondensator C18 und den ohmschen Widerstand R37 bestimmte maximale Einschaltdauer.

Der Regelverstärker 12 umfasst einen Stromspiegel mit einem Eingangstransistor T13 und einem Ausgangstransistor T14. Der Eingang des Stromspiegels ist über die Serienschaltung des ohmschen Widerstands R32 und eines ohmschen Widerstands R35 mit dem ersten Ausgangsanschluss A1 gekoppelt. Zwischen die Bezugselektrode des Ausgangstransistors T14 und das Bezugspotential ist ein Transistor T15 gekoppelt, wobei die, Steuerelektrode des Transistors T15 mit dem Abgriff eines Spannungsteilers gekoppelt ist, der zwischen den ersten A1 und den zweiten Ausgangsanschluss A2 gekoppelt ist, und neben dem erwähnten ohmschen Widerstand R32 eine Zenerdiode D18, ohmsche Widerstände R40, R41 sowie einen Kondensator C21 umfasst. Die Zenerdiode D18 dient dabei zur Einstellung einer Referenzspannung. Unterhalb eines durch die Zenerdiode D18 festgelegten Werts der Ausgangsspannung U_{A} wird demnach der Transistor T15 gesperrt. Der in den Stromspiegel eingeleitete Strom fließt über den ohmschen Widerstand R39 und den Kondensator C20, die mit der Bezugselektrode des Ausgangstransistors gekoppelt sind, zum Bezugspotential ab. Der Widerstand R41 und der Kondensator C21 sind so dimensioniert, dass ihre Zeitkonstante größer ist als eine Netzperiode. Dadurch wird sichergestellt, dass sich die Einschaltzeit des Boostschalters T11 innerhalb einer Netzperiode nicht verstellt. Erreicht die Ausgangsspannung U_{A} den vorgegebenen Wert, wird der Transistor T15 leitend geschaltet und führt dadurch zum Parallelschalten einer Impedanz zum ohmschen Widerstand R37. Auf diesem Wege wird die Einschaltdauer T_{EIN} des Boostschalters T11 gegenüber der maximalen Einschaltdauer verkürzt.

Ein weiterer Inverter IC1-D, dessen Eingang mit dem Verbindungspunkt zwischen der Zenerdiode D18 und dem ohmschen Widerstand R40 gekoppelt ist, verhindert, dass die Ausgangsspannung U_{A} beim Einschwingen oder bei einer zu hohen Netzspannung oder bei einem Lastabwurf einen vorgebbaren Wert überschreitet. Die am Eingang des Inverters IC1-D anliegende Spannung U_{R41} wird so gewählt, dass bei dem vorgebbaren Maximalwert der Ausgangsspannung U_{A} die obere Schaltschwelle des Inverters IC1-D erreicht wird. Wird diese erreicht, geht demnach die Spannung U_{IC1-D} am Ausgang des Inverters IC1-D auf Low. Damit geht die Spannung U_{IC1-E} eines weiteren Inverters IC1-E, der zwischen den Ausgang des Inverters IC1-D und den Eingang des Inverters IC1-C gekoppelt ist, auf High. Über die Diode D17 und den ohmschen Widerstand R38 geht demnach der Ausgang des Inverters IC1-C auf Low, wodurch der Boostschalter T11 ausgeschaltet wird und die Ausgangsspannung U_{A} durch den Boost-Konverter selbst nicht mehr steigen kann.

Ein Undervoltage Lockout wird dabei realisiert durch die Zenerdiode D38 und den ohmschen Widerstand R34, die zwischen den Ausgang des Inverters IC1-D und den Eingang des Inverters IC1-E gekoppelt sind. Ist beispielsweise im Anlauf des erfindungsgemäßen Boost-Konverters die Spannung U_{H} noch unter einem vorgebbaren Schwellwert, oder aber auch beim Ausschalten, kann der Boostschalter T11 nicht sicher angesteuert werden, da dafür eine bestimmte Spannungsamplitude benötigt wird.

Vorliegend wird, solange die Spannung U_{H} unter einem vorgebbaren Schwellwert liegt, sichergestellt, dass der Boostschalter T11 ausgeschaltet ist: Die Hilfsspannung U_{H} ist nämlich für die High-Pegel, die von den Invertern bereitgestellt werden, verantwortlich. Sie ist daher mit jedem Inverter gekoppelt, was jedoch in Fig. 1 der Übersichtlichkeit halber nicht eingezeichnet ist. Ist demnach der Ausgang des Inverters IC1-D auf High, tatsächlich aber aufgrund der reduzierten Hilfsspannung U_{H} auf einem etwas niedrigeren Pegel, so wird durch die Zenerdiode D38 und den ohmschen Widerstand R34 sichergestellt, dass der Pegel am Eingang des Inverters IC1-E sicher auf Low ist. Dazu muss die Differenz aus der Hilfsspannung U_{H} und der an der Zenerdiode D38 abfallenden Spannung U_{D38} kleiner sein als die untere Schaltschwelle des Inverters IC1-E. Dadurch ist die Spannung U_{IC1-E} am Ausgang des Inverters IC1-E auf High, die Spannung U_{IC1-C} am Ausgang des Inverters IC1-C auf Low und damit der Boostschalter T11 ausgeschaltet.

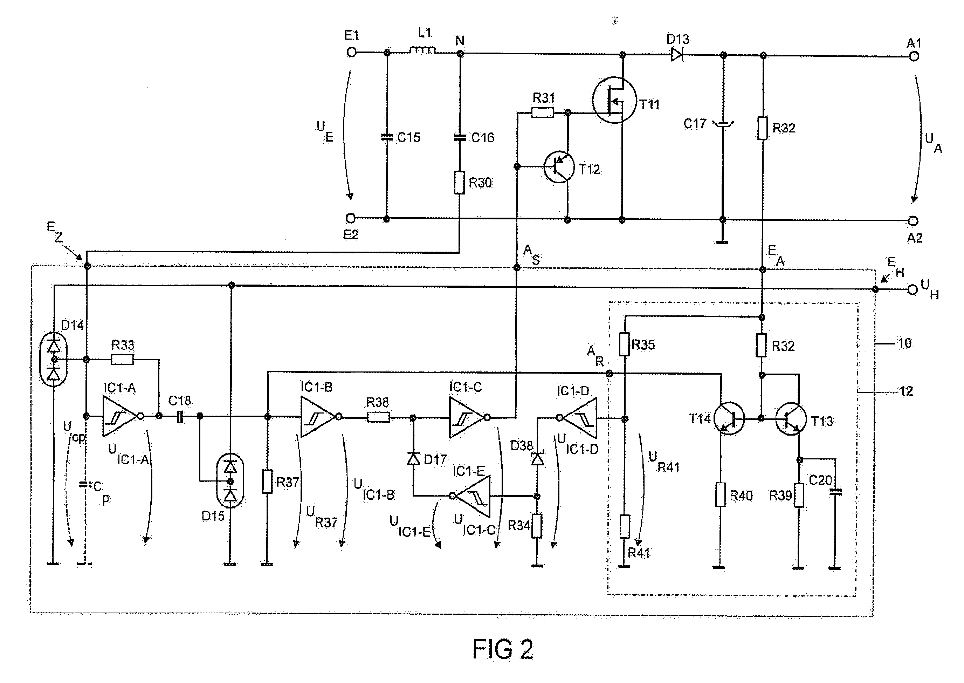

Fig. 2 zeigt ein zweites Ausführungsbeispiel eines außerhalb der Erfindung liegenden Boost-Konverters. Im Folgenden wird nur auf die Unterschiede zum in Fig. 1 dargestellten, ersten Ausführungsbeispiel eingegangen. Bei dem Ausführungsbeispiel von Fig. 2 ist die Zenerdiode D18 nicht mehr in einem Seitenzweig angeordnet, der dem Eingang des Stromspiegels parallelgeschaltet ist, sondern liegt seriell zum Eingang des Stromspiegels. Auch hier wird durch die Zenerdiode D18 eine Nichtlinearität in die Regelung eingeführt, die dafür sorgt, dass, wenn die Ausgangsspannung U_{A} einen vorgebbaren Wert überschreitet, der Boostschalter T11 ausgeschaltet wird. Allerdings wird bei der Ausführungsform von Fig. 2 eine Hochvolt-Zenerdiode benötigt. Diese wird aufgrund der höheren Spannung mit höheren Verlusten betrieben als die Ausführungsform gemäß Fig. 1. In dem Ausführungsbeispiel von Fig. 1, bei dem der rechte Zweig des Stromspiegels immer eingeschaltet ist, wird hingegen die Zenerdiode D18 nur von einem kleinen Strom durchflossen. Überdies wird ein Großteil der Spannung bereits über den ohmschen Widerstand R32 von Fig. 1 aufgenommen, so dass die Zenerdiode D18 als Niedervoltdiode ausgeführt sein kann.

Beide Ausführungsbeispiele können zum Zwecke der Erhöhung der Schaltzuverlässigkeit noch ergänzt werden mit einer Messeinrichtung zum Messen des Stroms im Boostschalter T11. Bei Überschreiten eines vorgebbaren Grenzwertes kann dann das Ausgangssignal der Steuerschaltung für eine vorgebbare Zeit oder eine vorgebbare Anzahl von Perioden auf low geschaltet werden. Da diese Schutzfunktion im Normalfall nicht benötigt wird und nur im Fehlerfall insbesondere den Boostschalter T11 schützen soll, reicht hierfür eine relativ ungenaue Messung aus. Vorgeschlagen wird daher, den Kanalwiderstand R_{SDONT11} des Boostschalters T11 während seiner Einschaltzeit selbst zu nutzen.

## Patentansprüche

1. Boost-Konverter mit
- einem Eingang mit einem ersten (E1) und einem zweiten Eingangsanschluss (E2) zum Anlegen einer Eingangsspannung (U_{E});
- einem Ausgang mit einem ersten (A1) und einem zweiten Ausgangsanschluss (A2) zum Bereitstellen einer Ausgangsspannung (U_{A});
- einer Boostdrossel (L1);
- einer Boostdiode (D13), wobei die Boostdrossel (L1) und die Boostdiode (D13) in Serie zwischen den ersten Eingangsanschluss (E1) und den ersten Ausgangsanschluss (A1) gekoppelt sind;
- einem Boostschalter (T11), der zwischen den Verbindungspunkt der Boostdrossel (L1) und der Boostdiode (D13) einerseits und dem zweiten Eingangsanschluss (E2) andererseits gekoppelt ist;
- einem Boostkondensator (C17), der zwischen den ersten (A1) und den zweiten Ausgangsanschluss (A2) gekoppelt ist; und
- einer Steuervorrichtung (10), die ausgelegt ist, an ihrem Ausgang (A_{S}) ein Ansteuersignal zum Ansteuern des Boostschalters (T11) bereitzustellen, wobei die Steuervorrichtung (10) einen ersten Eingang (E_{A}) umfasst, an den ein Signal gekoppelt ist, das mit der Ausgangsspannung (U_{A}) korreliert ist, wobei die Steuervorrichtung (10) einen Regelverstärker (12) umfasst mit einer Übertragungsfunktion, die im Bereich des Sollwertes der Ausgangsspannung (U_{A}) eine Nichtlinearität aufweist;
**dadurch gekennzeichnet,**
**dass** der Regelverstärker (12) einen Stromspiegel (T13, T14) umfasst, wobei die Übertragungsfunktion mit dem Verhältnis aus Ausgangsstrom des Stromspiegels (T13, T14) und Ausgangsspannung (U_{A}) des Boost-Konverters korreliert ist, und dass die Steuervorrichtung (10) einen ersten weiteren Inverter (IC1-D) umfasst, dessen Eingang mit dem Abgriff eines Spannungsteilers gekoppelt ist, der eine Zenerdiode (D18) und mindestens einen ohmschen Widerstand (R41) umfasst und zwischen den ersten (A1) und den zweiten Ausgangsanschluss (A2) gekoppelt ist, wobei zwischen den Ausgang des ersten weiteren Inverters (IC1-D) und ein Bezugspotential die Serienschaltung einer weiteren Zenerdiode (D38) und eines ohmschen Widerstands (R34) gekoppelt ist, wobei der Verbindungspunkt der weiteren Zenerdiode (D38) und des ohmschen Widerstands (R34) mit dem Ausgang (A_{S}) der Steuervorrichtung (10) gekoppelt ist.

2. Boost-Konverter nach Anspruch 1,
**dadurch gekennzeichnet,**
**dass** die Steuervorrichtung (10) einen ersten (IC1-A), einen zweiten (IC1-B) und einen dritten Inverter (IC1-C) umfasst, wobei der Eingang des ersten Inverters (IC1-A) mit dem Verbindungspunkt der Boostdrossel (L1) und der Boostdiode (D13) gekoppelt ist, wobei der Eingang des zweiten Inverters (IC1-B) mit dem Ausgang des ersten Inverters (IC1-A) einerseits und mit dem Ausgang des Regelverstärkers (12) andererseits gekoppelt ist, wobei der Eingang des dritten Inverters (IC1-C) mit dem Ausgang des zweiten Inverters (IC1-B) gekoppelt ist, wobei der Ausgang des dritten Inverters (IC1-C) mit dem Ausgang (A_{S}) der Steuervorrichtung (10) gekoppelt ist.

3. Boost-Konverter nach einem der Ansprüche 1 oder 2,
**dadurch gekennzeichnet,**
**dass** der Stromspiegel (T13, T14) einen Eingangstransistor (T13) und einen Ausgangstransistor (T14) umfasst, wobei zwischen die Bezugselektrode des Ausgangstransistors (T14) und ein Bezugspotential ein Hilfstransistor (T15) gekoppelt ist, wobei die Steuerelektrode des Hilfstransistors (T15) mit dem Abgriff des Spannungsteilers (R32, D18, R40, R41, C21) gekoppelt ist, der zwischen den ersten (A1) und den zweiten Ausgangsanschluss (A2) gekoppelt ist und mindestens den ersten ohmschen Widerstand (R32, R40, R41) und die erste Zenerdiode (D18) umfasst.

4. Boost-Konverter nach Anspruch 2,
**dadurch gekennzeichnet,**
**dass** die Steuervorrichtung (10) einen zweiten weiteren Inverter (IC1-E) umfasst, wobei der Verbindungspunkt der weiteren Zenerdiode (D38) und des ohmschen Widerstands (R34) mit dem Eingang des zweiten weiteren Inverters (IC1-E) gekoppelt ist, wobei der Ausgang des zweiten weiteren Inverters (IC1-E) mit dem Eingang des dritten Inverters (IC1-C) gekoppelt ist.

5. Boost-Konverter nach Anspruch 2,
**dadurch gekennzeichnet,**
**dass** der Eingang des ersten Inverters (IC1-A) über eine erste Diode (D14) mit einer Hilfsspannung (U_{H}) und über eine zweite Diode (D14) an das Bezugspotential gekoppelt ist, und dass der Eingang des zweiten Inverters (IC1-B) über eine dritte Diode (D15) mit der Hilfsspannung (U_{H}) und über eine vierte Diode (D15) mit dem Bezugspotential gekoppelt ist.

6. Verfahren zum Betreiben einer elektrischen Last an einem Boost-Konverter gemäß Anspruch 1 mit folgenden Schritten:
a) Koppeln eines mit der Ausgangsspannung (U_{A}) korrelierten Signals an den Eingang des Stromspiegels (T13, T14) des Regelverstärkers (12); und
b) Korrelieren eines Signals am Ausgang (Aₛ) der Steuervorrichtung (10) mit dem Ausgangsstrom des Stromspiegels (T13, T14); und
c) Bereitstellen des Signals am Ausgang (Aₛ) der Steuervorrichtung (10) als das Ansteuersignal zum Ansteuern des Boostschalters (T11).

## Claims

1. Boost converter comprising
- an input comprising a first input connection (E1) and a second input connection (E2) for applying an input voltage (U_{E}) ;
- an output comprising a first output connection (A1) and a second output connection (A2) for providing an output voltage (U_{A}) ;
- a boost inductor (L1);
- a boost diode (D13), wherein the boost inductor (L1) and the boost diode (D13) are coupled in series between the first input connection (E1) and the first output connection (A1);
- a boost switch (T11), which is coupled between the node between the boost inductor (L1) and the boost diode (D13) on one side and the second input connection (E2) on the other side;
- a boost capacitor (C17), which is coupled between the first output connection (A1) and the second output connection (A2); and
- a control apparatus (10), which is designed to provide an actuation signal for actuating the boost switch (T11) at the output (A_{S}) of said control apparatus, wherein the control apparatus (10) comprises a first input (E_{A}), to which a signal is coupled, which signal is correlated with the output voltage (U_{A}), wherein the control apparatus (10) comprises a control amplifier (12) having a transfer function which has a nonlinearity in the region of the setpoint value of the output voltage (U_{A});
**characterized**
**in that** the control amplifier (12) comprises a current mirror (T13, T14), wherein the transfer function is correlated with the ratio of the output current of the current mirror (T13, T14) to the output voltage (U_{A}) of the boost converter, and in that the control apparatus (10) comprises a first further inverter (IC1-D), whose input is coupled to the tap of a voltage divider, which comprises a zener diode (D18) and at least one ohmic resistor (R41) and is coupled between the first output connection (A1) and the second output connection (A2), wherein the series circuit comprising a further zener diode (D38) and an ohmic resistor (R34) is coupled between the output of the first further inverter (IC1-D) and a reference potential, wherein the node between the further zener diode (D38) and the ohmic resistor (R34) is coupled to the output (As) of the control apparatus (10).

2. Boost converter according to Claim 1,
**characterized**
**in that** the control apparatus (10) comprises a first inverter (IC1-A), a second inverter (IC1-B) and a third inverter (IC1-C), wherein the input of the first inverter (IC1-A) is coupled to the node between the boost inductor (L1) and the boost diode (D13), wherein the input of the second inverter (IC1-B) is coupled to the output of the first inverter (IC1-A) on one side and to the output of the control amplifier (12) on the other side, wherein the input of the third inverter (IC1-C) is coupled to the output of the second inverter (IC1-B), wherein the output of the third inverter (IC1-C) is coupled to the output (Aₛ) of the control apparatus (10).

3. Boost converter according to either of Claims 1 and 2, **characterized**
**in that** the current mirror (T13, T14) comprises an input transistor (T13) and an output transistor (T14), wherein an auxiliary transistor (T15) is coupled between the reference electrode of the output transistor (T14) and a reference potential, wherein the control electrode of the auxiliary transistor (T15) is coupled to the tap of the voltage divider (R32, D18, R40, R41, C21), which is coupled between the first output connection (A1) and the second output connection (A2) and comprises at least the first ohmic resistor (R32, R40, R41) and the first zener diode (D18).

4. Boost converter according to Claim 2,
**characterized**
**in that** the control apparatus (10) comprises a second further inverter (IC1-E), wherein the node between the further zener diode (D38) and the ohmic resistor (R34) is coupled to the input of the second further inverter (IC1-E), wherein the output of the second further inverter (IC1-E) is coupled to the input of the third inverter (IC1-C).

5. Boost converter according to Claim 2,
**characterized**
**in that** the input of the first inverter (IC1-A) is coupled to an auxiliary voltage (U_{H}) via a first diode (D14) and to the reference potential via a second diode (D14), and in that the input of the second inverter (IC1-B) is coupled to the auxiliary voltage (U_{H}) via a third diode (D15) and to the reference potential via a fourth diode (D15).

6. Method for operating an electrical load on a boost converter according to Claim 1 having the following steps:
a) coupling a signal correlated with the output voltage (U_{A}) to the input of the current mirror (T13, T14) of the control amplifier (12); and
b) correlating a signal at the output (A_{S}) of the control apparatus (10) with the output current of the current mirror (T13, T14); and
c) providing the signal at the output (Aₛ) of the control apparatus (10) as the actuation signal for actuating the boost switch (T11).

## Revendications

1. Convertisseur survolteur comprenant
- une entrée avec une première (E1) et une seconde borne d'entrée (E2) pour appliquer une tension d'entrée (U_{E}) ;
- une sortie avec une première (A1) et une seconde borne de sortie (A2) pour fournir une tension de sortie (U_{A}) ;
- une inductance de survolteur (L1) ;
- une diode de survolteur (D13), l'inductance de survolteur (L1) et la diode de survolteur (D13) étant couplées en série entre la première borne d'entrée (E1) et la première borne de sortie (A1);
- un interrupteur de survolteur (T11), couplé entre le point de connexion de l'inductance de survolteur (L1) et de la diode de survolteur (D13) d'une part et la seconde borne d'entrée (E2) d'autre part ;
- un condensateur de survolteur (C17), couplé entre la première (A1) et la seconde borne de sortie (A2) ; et
- un dispositif de commande (10), adapté pour fournir à sa sortie (A_{S}) un signal de commande pour commander l'interrupteur de survolteur (T11), le dispositif de commande (10) comprenant une première entrée (E_{A}) à laquelle est couplé un signal qui est corrélé avec la tension de sortie (U_{A}), le dispositif de commande (10) comprenant un amplificateur de réglage (12) ayant une fonction de transfert qui présente une non-linéarité dans la plage de valeur de consigne de la tension de sortie (U_{A}) ;
**caractérisé**
**en ce que** l'amplificateur de réglage (12) comprend un miroir de courant (T13, T14), la fonction de transfert étant corrélée avec le rapport entre le courant de sortie du miroir de courant (T13, T14) et la tension de sortie (U_{A}) du convertisseur survolteur, et en ce que le dispositif de commande (10) comprend un premier autre inverseur (IC1-D), dont l'entrée est couplée à la prise d'un diviseur de tension qui comprend une diode Zener (D18) et au moins une résistance ohmique (R41) et est couplé entre la première (A1) et la seconde borne de sortie (A2), entre la sortie du premier autre inverseur (IC1-D) et un potentiel de référence étant couplé le montage en série d'une autre diode Zener (D38) et d'une résistance ohmique (R34), le point de connexion de l'autre diode Zener (D38) et de la résistance ohmique (R34) étant couplé à la sortie (A_{S}) du dispositif de commande (10).

2. Convertisseur survolteur selon la revendication 1,
**caractérisé**
**en ce que** le dispositif de commande (10) comprend un premier (IC1-A), un deuxième (IC1-B) et un troisième inverseur (IC1-C), l'entrée du premier inverseur (IC1-A) étant couplée au point de connexion de l'inductance de survolteur (L1) et de la diode de survolteur (D13), l'entrée du deuxième inverseur (IC1-B) étant couplée à la sortie du premier inverseur (IC1-A) d'une part et à la sortie de l'amplificateur de réglage (12) d'autre part, l'entrée du troisième inverseur (IC1-C) étant couplée à la sortie du deuxième inverseur (IC1-B), la sortie du troisième inverseur (IC1-C) étant couplée à la sortie (A_{S}) du dispositif de commande (10).

3. Convertisseur survolteur selon l'une des revendications 1 ou 2,
**caractérisé**
**en ce que** le miroir de courant (T13, T14) comprend un transistor d'entrée (T13) et un transistor de sortie (T14), un transistor auxiliaire (T15) étant couplé entre l'électrode de référence du transistor de sortie (T14) et un potentiel de référence, l'électrode de commande du transistor auxiliaire (T15) étant couplée à la prise du diviseur de tension (R32, D18, R40, R41, C21) qui lui est couplé entre la première (A1) et la seconde borne de sortie (A2) et comprend au moins la première résistance ohmique (R32, R40, R41) et la première diode Zener (D18).

4. Convertisseur survolteur selon la revendication 2,
**caractérisé**
**en ce que** le dispositif de commande (10) comprend un second autre inverseur (IC1-E), le point de connexion de l'autre diode Zener (D38) et de la résistance ohmique (R34) étant couplé à l'entrée du second autre inverseur (IC1-E), la sortie du second autre inverseur (IC1-E) étant couplée à l'entrée du troisième inverseur (IC1-C).

5. Convertisseur survolteur selon la revendication 2,
**caractérisé**
**en ce que** l'entrée du premier inverseur (IC1-A) est couplée via une première diode (D14) à une tension auxiliaire (U_{H}) et via une deuxième diode (D14) au potentiel de référence, et en ce que l'entrée du deuxième inverseur (IC1-B) est couplée via une troisième diode (D15) à la tension auxiliaire (U_{H}) et via une quatrième diode (D15) au potentiel de référence.

6. Procédé pour faire fonctionner une charge électrique sur un convertisseur survolteur selon la revendication 1 comprenant les étapes suivantes :
a) coupler un signal corrélé avec la tension de sortie (U_{A}) à l'entrée du miroir de courant (T13, T14) de l'amplificateur de réglage (12) ; et
b) corréler un signal à la sortie (A_{S}) du dispositif de commande (10) avec le courant de sortie du miroir de courant (T13, T14) ; et
c) fournir le signal à la sortie (A_{S}) du dispositif de commande (10) comme le signal de commande pour commander l'interrupteur de survolteur (T11).
